(19) Europäisches Patentamt
European Patent Office
Office européen des brevets

(11) EP 0 688 801 B1

(12) **EUROPÄISCHE PATENTSCHRIFT**

(45) Veröffentlichungstag und Bekanntmachung des Hinweises auf die Patenterteilung:
**29.12.1997 Patentblatt 1997/52**

(51) Int Cl.6: **C08F 232/00**, C08F 210/00

(21) Anmeldenummer: **95109013.3**

(22) Anmeldetag: **12.06.1995**

(54) **Verfahren zur Herstellung von Cycloolefincopolymeren**

Process for preparing cycloolefin copolymers

Procédé de préparation de copolymères de cyclooléfines

(84) Benannte Vertragsstaaten:
**DE FR GB IT NL**

(30) Priorität: **24.06.1994 DE 4422157**

(43) Veröffentlichungstag der Anmeldung:
**27.12.1995 Patentblatt 1995/52**

(73) Patentinhaber:
- **HOECHST AKTIENGESELLSCHAFT**
  **65929 Frankfurt am Main (DE)**
- **MITSUI PETROCHEMICAL INDUSTRIES, LTD.**
  **Chiyoda-ku, Tokyo 100 (JP)**

(72) Erfinder:
- **Weller, Thomas, Dr.**
  **D-55130 Mainz (DE)**
- **Osan, Frank, Dr.**
  **D-65779 Kelkheim (DE)**
- **Küber, Frank, Dr.**
  **D-61440 Oberursel (DE)**
- **Aulbach, Michael, Dr.**
  **D-65719 Hofheim (DE)**

(74) Vertreter: **Aulmich, Gerhard, Dr.**
**Hoechst AG**
**Patent- und Lizenzabteilung**
**Gebäude K 801**
**65926 Frankfurt am Main (DE)**

(56) Entgegenhaltungen:
**EP-A- 0 407 870**
**EP-A- 0 485 893**
**EP-A- 0 503 422**

EP 0 688 801 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von transparenten Cycloolefin-Copolymeren (COC) mit hohen Reißfestigkeiten und hohen Viskositätszahlen.

Verfahren mittels Metallocen-Katalysatorsystemen cyclische Olefine mit alpha-Olefinen zu copolymerisieren sind bekannt (EP 283 164, EP 447 072, EP 407 870). Die Polymerisation der Cycloolefine verläuft dabei unter Erhalt der Cyclen und kann in Lösungsmitteln oder in Masse durchgeführt werden. Als Lösungsmittel können z.B. Kohlenwasserstoffe dienen. Die Cycloolefin-Copolymere besitzen eine hohe thermische Formbeständigkeit und ein Einsatz der Polymere als thermoplastische Formmassen ist möglich.

Je nach Anwendung werden unterschiedliche Anforderungen an die Schmelzviskosität des Polymers gestellt. Für Spritzgußanwendungen werden niedrigere Schmelzviskositäten benötigt als für Extrusionsanwendungen. Die Schmelzviskosität der Cycloolefin-Copolymere steigt bei gegebener Comonomerzusammensetzung und Verarbeitungstemperatur mit dem mittleren Molekulargewicht an. Ein Maß für das mittlere Molekulargewicht ist z.B. die Viskositätszahl. Ganz generell ist es wünschenswert die Viskositätszahl in einem möglichst weiten Bereich kontrollieren zu können. Nach dem Stand der Technik wird die Viskositätszahl von Cycloolefin-Copolymeren hauptsächlich durch Wasserstoff-Dosierung und, soweit technisch realisierbar, durch Variation der Reaktionstemperatur gesteuert. Zur Senkung der Viskositätszahl kann entweder eine Wasserstoffregelung dienen oder die Polymerisationstemperatur erhöht werden. Dagegen kann die Erhöhung der Viskositätszahl nur durch Temperaturerniedrigung realisiert werden. Der Temperaturerniedrigung sind jedoch technische Grenzen gesetzt, da bei niedrigen Reaktionstemperaturen die zeitliche Temperaturkonstanz nicht mehr gewährleistet ist. Dies ist darauf zurückzuführen, daß die Effizienz der Kühlung mit der Temperaturdifferenz zwischen Polymerisations- und Kühltemperatur ansteigt. Da aus wirtschaftlichen Gründen bevorzugt mit Flußwasser gekühlt wird, ist ein Polymerisationsprozeß, der unter ca. 35°C abläuft somit nicht mehr wirtschaftlich zu kühlen. Außerdem wird bei niedrigen Polymerisationstemperaturen die Aktivität des Katalysators und damit die Reaktionsgeschwindigkeit zu weit herabgesetzt. Voraussetzung für einen weiten zugänglichen Viskositätszahl-Bereich ist also, daß das Verfahren von vorneherein Cycloolefin-Copolymere mit einer hohen Viskositätszahl liefert, die dann gegebenenfalls durch geeignete Maßnahmen erniedrigt werden kann. Darüber hinaus ist es wünschenswert, hohe Reißfestigkeiten und Raum-Zeit-Ausbeuten zu erzielen.

Der vorliegenden Erfindung lag daher die Aufgabe zugrunde, ein Verfahren zu finden, welches die Herstellung von Cycloolefin-Copolymeren mit hohen Reißfestigkeiten und hohen Viskositätszahlen ermöglicht und hohe Raum-Zeit-Ausbeuten ermöglicht.

Es wurde gefunden, daß durch Verwendung spezieller Metallocene die gestellte Aufgabe gelöst werden kann.

Die vorliegende Erfindung betrifft somit ein Verfahren zur Herstellung eines Cycloolefincopolymers durch Polymerisation mindestens eines Cycloolefins und mindestens eines acyclischen Olefins in Gegenwart eines Katalysators, welcher mindestens einen Cokatalysator und mindestens ein Metallocen der Formel (I) enthält,

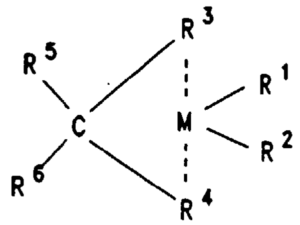

(I),

worin

M Zirkonium bedeutet
$R^1$ und $R^2$ gleich oder verschieden sind und ein Halogenatom bedeuten,
$R^3$ und $R^4$ gleich sind und ein Cyclopentadienyl oder subtituiertes Cyclopentadienyl, Indenyl oder substituiertes Indenyl bedeuten,
und $R^5$ und $R^6$ gleich oder verschieden sind und eine Methylgruppe, oder Phenylgruppe bedeuten, wobei das Metallocen der Formel (I) als Racemat vorliegt.

Bevorzugt eingesetzt werden in dem erfindungsgemäßen Verfahren eingesetzt, 0,1 bis 99,9 Gew.-%, bezogen auf die Gesamtmenge der Monomeren, mindestens eines polycyclischen Olefins der Formeln I, II, III, IV, V, VI oder VII

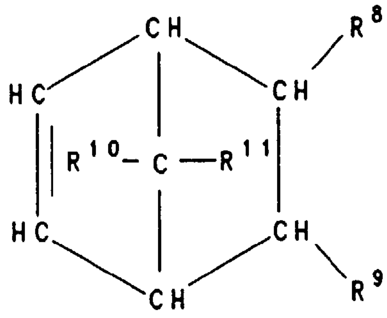

(II),

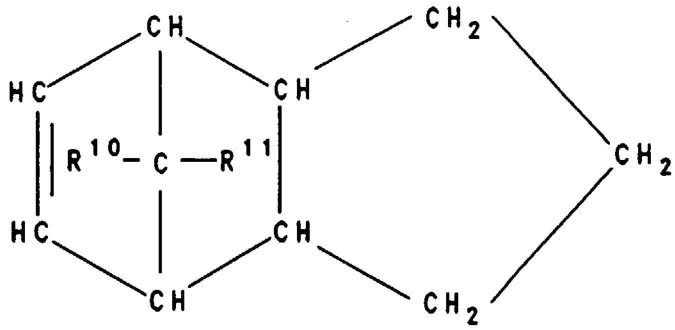

(III),

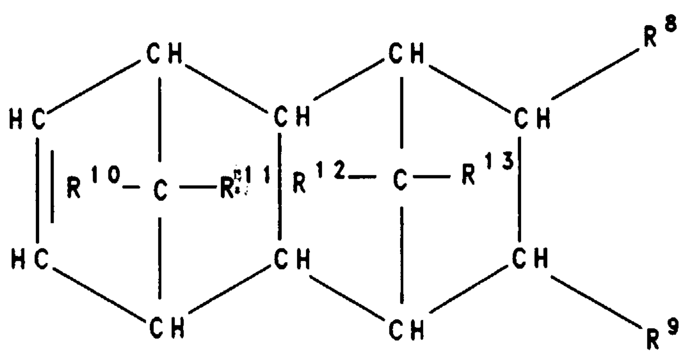

(IV),

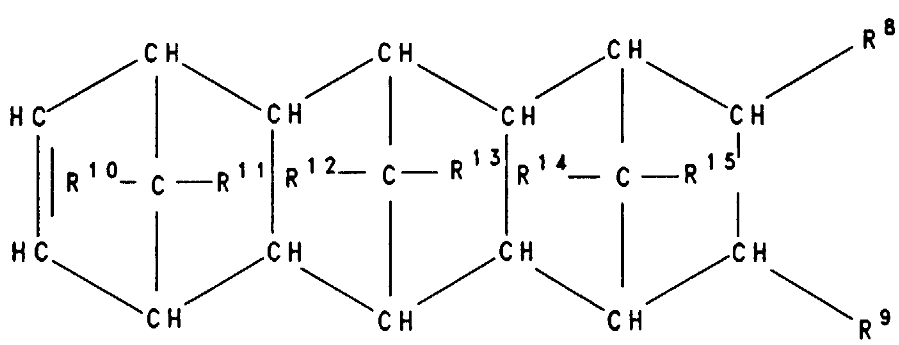

(V),

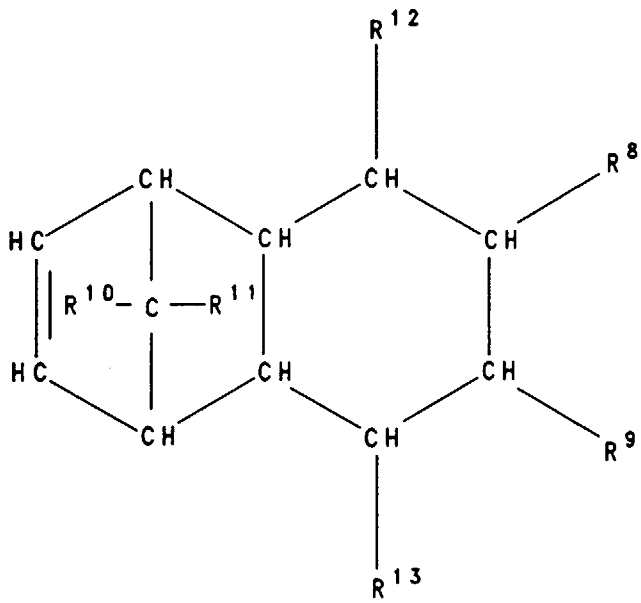

(VI),

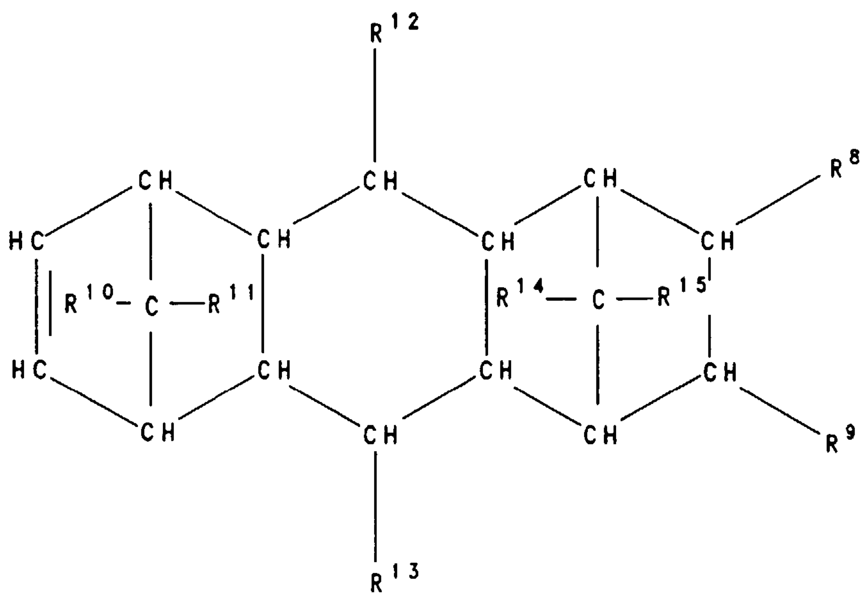

(VII),

worin $R^8$, $R^9$, $R^{10}$, $R^{11}$, $R^{12}$, $R^{13}$, $R^{14}$ und $R^{15}$ gleich oder verschieden sind und ein Wasserstoffatom oder einen Kohlenwasserstoffrest, der vorzugsweise 1 - 20 C-Atome aufweist, wie $C_6$-$C_{10}$-Aryl oder $C_1$-$C_8$-Alkyl, bedeuten, wobei gleiche Reste in den verschiedenen Formeln eine unterschiedliche Bedeutung haben können,

0 bis 99,9 Gew.-%, bezogen auf die Gesamtmenge der Monomeren, eines monocyclischen Olefins der Formel VIII

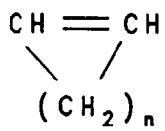

(VIII),

worin n eine Zahl von 2 bis 10 ist, und

0,1 bis 99,9 Gew.-%, bezogen auf die Gesamtmenge der Monomeren, mindestens eines acyclischen Olefins der Formel IX

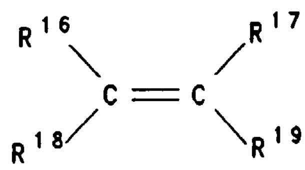 (IX),

worin $R^{16}$, $R^{17}$, $R^{18}$ und $R^{19}$ gleich oder verschieden sind und ein Wasserstoffatom oder einen Kohlenwasserstoffrest, der vorzugsweise 1 - 20 C-Atome aufweist, wie $C_6$-$C_{10}$-Aryl oder $C_1$-$C_8$-Alkyl, bedeuten.

Im erfindungsgemäßen Verfahren wird vorzugsweise ein Cycloolefin der Formeln II oder IV, worin $R^8$, $R^9$, $R^{10}$, $R^{11}$, $R^{12}$, $R^{13}$, $R^{14}$ und $R^{15}$ gleich oder verschieden sind und ein Wasserstoffatom oder einen $C_1$-$C_{20}$-Kohlenwasserstoffrest, bevorzugt einen $C_6$-$C_{10}$-Arylrest oder einen $C_1$-$C_8$-Alkylrest, bedeuten, wobei gleiche Reste in den verschiedenen Formeln eine unterschiedliche Bedeutung haben können, eingesetzt.

Gegebenenfalls wird auch ein monocyclisches Olefin der Formel VIII

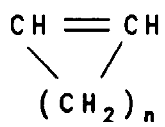 (VIII),

worin n eine Zahl von 2 bis 10 ist, verwendet. Von den Cycloolefinen der Formel VIII ist Cyclopenten, das substituiert sein kann, bevorzugt.

Außerdem wird bevorzugt ein acyclisches 1-Olefin der Formel IX verwendet,

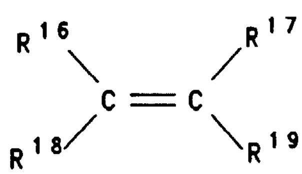 (IX),

worin $R^{16}$, $R^{17}$, $R^{18}$ und $R^{19}$ gleich oder verschieden sind und ein Wasserstoffatom oder einen $C_1$-$C_{20}$-Kohlenwasserstoffrest, bevorzugt einen $C_6$-$C_{10}$-Arylrest und einen $C_1$-$C_8$-Alkylrest bedeuten. Bevorzugt sind dabei Ethylen und Propylen.

Insbesondere werden Copolymere von polycyclischen Olefinen, vorzugsweise der Formeln II und IV, mit Ethylen hergestellt.

Besonders bevorzugte polycyclische Olefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere.

Das polycyclische Olefin wird in einer Menge von 0,1 bis 99,9 Mol-%, bevorzugt 40 - 75 Mol-% und das acyclische Olefin in einer Menge von 0,1 bis 99,9 Mol-%, bevorzugt 20 - 60 Mol-%, jeweils bezogen auf die Gesamtmenge der Monomeren, eingesetzt.

Die Konzentration des acyclischen Olefins ergibt sich aus dessen Löslichkeit in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden.

Der für das erfindungsgemäße Verfahren zu verwendende Katalysator enthält mindestens einen Cokatalysator

und mindestens ein Metallocen der Formel I

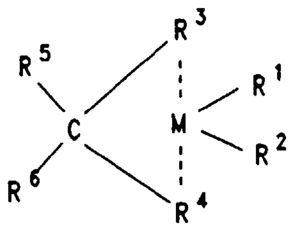

(I).

In Formel I sind $R^1$ und $R^2$ bevorzugt gleich $R_1$ und $R_2$ bedeuten ein Halogenatom, wie Fluor, Chlor, Brom oder Jod, insbesondere Chlor.

$R^3$ und $R^4$ sind gleich und bevorzugt substituiertes Cyclopentadienyl wie Tetramethylcyclopentadienyl, Indenyl oder substituiertes Indenyl wie Isopropylindenyl, Phenylindenyl oder Benzoindenyl.

$R^5$ und $R^6$ sind bevorzugt gleich.

Beispiele für in dem erfindungsgemäßen Verfahren eingesetzte Metallocene sind die Racemate von:
Isopropylen-bis(cyclopentadienyl)zirkoniumdichlorid, Methylphenylmethylen-bis(cyclopentadienyl)zirkoniumdichlorid, Diphenylmethylen-bis(cyclopentadienyl)zirkoniumdichlorid, Isopropylen-bis(2,3,4, 5-tetramethylcyclopentadienyl)zirkoniumdichlorid, Methylphenylmethylen-bis(2,3,4,5-tetramethylcyclopentadienyl)zirkoniumdichlorid, Diphenylmethylen-bis(2,3,4,5-tetramethylcyclopentadienyl)zirkoniumdichlorid, Isopropylen-bis(1-indenyl)zirkoniumdichlorid, Methylphenylmethylen-bis(1 -indenyl)zirkoniumdichlorid, Diphenylmethylen-bis(1-indenyl)zirkoniumdichlorid, Isopropylen-bis(1-(4-phenylindenyl))zirkoniumdichlorid, Methylphenylmethylen-bis(1-(4-phenylindenyl))zirkoniumdichlorid, Diphenylmethylen-bis(1-(4-phenylindenyl))zirkoniumdichlorid, Isopropylen-bis(1-(4-isopropylindenyl))zirkoniumdichlorid, Methylphenylmethylen-bis(1-(4-isopropylindenyl))zirkoniumdichlorid, Diphenylmethylen-bis(1-(4-isopropylindenyl)) zirkoniumdichlorid, Isopropylen-bis(1-(4,5-benzoindenyl)zirkoniumdichlorid, Methylphenylmethylen-bis(1-(4,5-benzoindenyl))zirkoniumdichlorid, und Diphenylmethylen-bis(1-(4,5-benzoindenyl))zirkoniumdichlorid.

Besonders bevorzugte Metallocene sind:
Isopropylen-bis(Isopropylen-bis(1-indenyl)zirkoniumdichlorid und Diphenylmethylen-bis(1-indenyl)zirkoniumdichlorid.

Der Cokatalysator ist bevorzugt ein Aluminoxan, insbesondere der Formel X

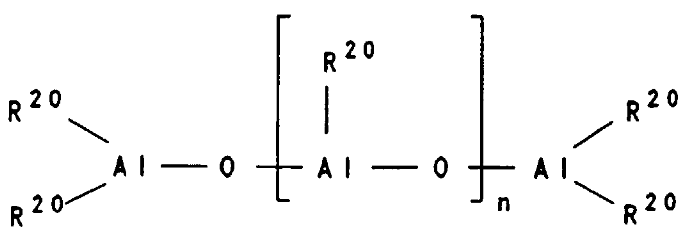

(X)

für den linearen Typ und/oder der Formel XI

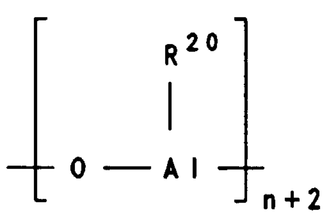

(XI)

für den cyclischen Typ, wobei in den Formeln X und XI $R^{20}$ gleich oder verschieden sind und eine $C_1$-$C_6$-Alkylgruppe, Phenyl oder Benzyl bedeutet und n eine ganze Zahl von 0 bis 50 ist. Die $C_1$-$C_6$-Alkylgruppe ist bevorzugt Methyl, Ethyl oder Isobutyl, Butyl oder Neopentyl, besonders bevorzugt Methyl. n ist eine ganze Zahl von 0 bis 50, bevorzugt 5 bis 40.

Das Aluminoxan kann auf verschiedene Arten nach bekannten Verfahren hergestellt werden. Eine der Methoden

ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{20}$ werden entsprechend der gewünschten Zusammensetzung zwei verschiedene Aluminiumtrialkyle ($AlR_3$ + $AlR_3$') mit Wasser umgesetzt (S. Pasynkiewics, Polyhedron 9 (1990) 429, EP-A 302 424).

Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung gemeinsam, die in freier Form oder als Addukt vorliegt.

Es ist auch möglich, das Aluminoxan auf einen Träger aufzubringen und es dann als Suspension in geträgerter Form einzusetzen. Es sind mehrere Trägerungsverfahren bekannt (EP 567 952), z.B. kann Kieselgel als Träger fungieren.

Es ist möglich, das Metallocen vor dem Einsatz in der Polymerisationsreaktion mit einem Cokatalysator, insbesondere einem Aluminoxan zu aktivieren. Dadurch wird die Polmerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff; bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ mol pro mol Aluminoxan eingesetzt. Die Voraktivierungszeit beträgt 1 Minute bis 60 Stunden, vorzugsweise 5 bis 60 Minuten. Man arbeitet bei einer Temperatur von -78°C bis 100°C, vorzugsweise 0 bis 70°C.

Die Katalysatorkomponenten können auch in einer Vorpolymerisation eingesetzt werden oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man anstelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R = Aryl, das auch fluoriert oder teilfluoriert sein kann. In diesem Fall besteht der Katalysator aus dem Reaktionsprodukt eines Metallocens mit einer der genannten Verbindungen (EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocene werden in Form ihrer Racemate eingesetzt. Die Metallocenverbindung wird üblicherweise in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird üblicherweise in einer Konzentration von $10^{-4}$ bis $10^{-1}$, vorzugsweise $10^{-4}$ bis $10^{-2}$ mol pro $dm^3$ Reaktorvolumen verwendet, bezogen auf den Gehalt an Aluminium. Prinzipiell sind aber auch höhere Konzentrationen möglich.

Die Polymerisation wird im flüssigen Cycloolefin selbst oder in Cycloolefin-Lösung durchgeführt. Bevorzugt liegt die Polymerisationstemperatur bei -78 bis 150°C und der Druck bei 0,01 bis 64, insbesondere bei 1 bis 64 bar.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (EP-A-560 090).

Die mittlere Molmasse des gebildeten Polymeren läßt sich weiter durch Wasserstoff-Dosierung, Variation der Konzentration der Katalysatorkomponenten oder Variation der Temperatur in bekannter Weise steuern. Die Polydispersität $M_w/M_n$ der Cycloolefin-Copolymeren liegt bevorzugt zwischen 1,9 und 3,5.

Mit dem erfindungsgemäßen Verfahren lassen sich amorphe Cycloolefincopolymere herstellen, die eine hohe Viskositätszahl aufweisen. Außerdem ist über eine Wasserstoffregelung oder eine Variation der Polymerisationstemperatur ein breiter Bereich an Viskositätszahlen zugänglich. Die erfindungsgemäß hergestellten Cycloolefincopolymere weisen hohe Reißfestigkeiten auf und können mit hoher Raum-Zeit-Ausbeute erhalten werden. Außerdem enthalten erfindungsgemäß hergestellte ethylenhaltige Cycloolefincopolymere keine kristallinen Ethylensequenzen (DSC gemäß DIN 53765) und weisen eine hohe Transparenz auf. Die Copolymeren sind transparent, hart und thermoplastisch

verarbeitbar. Die Reißspannungen (gemäß DIN 53457) liegen bevorzugt im Bereich von 50 bis 100 MPa, besonders bevorzugt zwischen 60 und 80 MPa. Die Viskositätszahlen (gemäß DIN 53728, bei 135°C in Dekalin) liegen bevorzugt im Bereich von 100 bis 250 $cm^3/g$ insbesondere 150 - 250 $cm^3/g$. Sowohl beim Extrudieren als auch beim Spritzgießen werden bei Temperaturen von 300°C keine Zersetzungsreaktionen oder Viskositätsabbau gefunden.

Die erfindungsgemäß hergestellten Materialien eignen sich besonders zur Herstellung von Formkörpern wie Extrusionsteilen (z.B. Folien, Schläuche, Rohre, Stangen und Fasern) oder Spritzgußartikeln beliebiger Form und Größe. Eine wichtige Eigenschaft der erfindungsgemäßen Materialien ist ihre Transparenz. Dadurch kommt besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- oder Fokussierscheiben für Solarzellen, als Deck- und Streuscheiben für Leistungsoptiken, als Lichtwellenleiter in der Form von Fasern oder Folien.

In schlagzähmodifizierter Form sind die erfindungsgemäßen Materialien als Strukturwerkstoff in verschiedenen technischen Bereichen einsetzbar (EP 0 566 988).

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly(methylmethacrylat), weitere Polymethacrylate, Polyacrylate, (Acrylatmethacrylat)-Copolymere, methacrylat)-Copolymere, Bisphenol-A-Polycarbonat, Polystyrol, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den Beispielen und der Tabelle angegebenen Glastemperaturen (Tg) und Schmelzpunkte (Fp) wurden mittels Differential Scanning Calorimetry (DSC gemäß DIN 53765) bei einer Aufheizrate von 20°C/min bestimmt. Die angegebenen Viskositätszahlen (VZ) wurden gemäß DIN 53 728 bei 135°C in Dekalin ermittelt.

Als Maß für die Katalysatoraktivität (A*) wurde die Ausbeute an Polymer pro Zeiteinheit und pro mmol Metallocen herangezogen.
Die Molmasse des verwendeten Methylaluminoxans (MAO) beträgt 1000 g/mol und ist als durchschnittliches Molekulargewicnt von isoliertem MAO zu betrachten.

$$\text{Aktivität} = \frac{\text{Polymer [g]}}{\text{Zeiteinheit [h] x Menge Metallocen [mmol]}}$$

Beispiel 1:

In einen mehrmals mit Stickstoff gespülten 1500 ml Reaktor wurden 600 ml einer 85 gewichtsproz. Lösung von Norbornen in Toluol gefüllt und auf 70°C aufgeheizt. Durch mehrfaches Aufdrücken von Ethylen (18 bar Überdruck) wurde die Lösung mit Ethylen gesättigt. In den entspannten Reaktor wurden im Ethylengegenstrom 7 ml toluolische Methylaluminoxanlösung gegeben und anschließend 15 min gerührt. In die so vorbereitete Reaktionslösung wurden 1,5 mg rac-Isopropylenbis(1-indenyl)zirkoniumdichlorid gegeben, welches in 5 ml toluolischer Aluminoxanlösung 15 min lang bei Raumtempertur voraktiviert worden war. Danach wurde sofort möglichst schnell ein Ethylendruck von 18 bar eingestellt.
Unter Rühren bei ca. 750 UpM wurde eine Stunde bei 70°C polymerisiert, wobei der Ethylendruck konstant bei 18 bar gehalten wurde.
Zur Beendigung der Reaktion wurde zuerst der Reaktor entspannt und anschließend die Reaktionslösung in ein Gefäß abgelassen. Das Polymer wurde in 3500 ml Aceton gefällt und nach 5 min Rühren filtriert. Der Filterkuchen wurde mehrfach mit 10proz. Salzsäure und Aceton im Wechsel gewaschen. Abschließend wurde mit Wasser neutral gewaschen und nach Zugabe von 2000 ml Aceton filtriert. Das so gereinigte Pulver wurde bei 80°C und einem Druck von 0,2 bar 15 Stunden getrocknet.
Nach dem Trocknen wurde 65,5 g farbloses Pulver erhalten; das enstpricht einer Aktivität von 18 900 g Polymer/Stunde x mmol Metallocen. An dem Polymer wurde eine Viskositätszahl von 182 $cm^3/g$ und eine Glastemperatur von 134°C gemessen. Durch thermische Analyse konnte kein Schmelzpunkt nachgewiesen werden.

Beispiel 2:

Beispiel 2 wurde analog Beispiel 1 durchgeführt, jedoch wurde bei 90°C polymerisiert und 0,2 mg rac-Isopropylenbis(1-indenyl)zirkoniumdichlorid eingesetzt.
Es wurde 89,0 g farbloses Pulver erhalten; das enstpricht einer Aktivität von 25 700 g Polymer/Stunde x mmol Metallocen. An dem Polymer wurde eine Viskositätszahl von 148 $cm^3/g$ und eine Glastemperatur von 144°C gemessen. Durch thermische Analyse konnte kein Schmelzpunkt nachgewiesen werden.

Beispiel 3:

Beispiel 3 wurde analog Beispiel 1 durchgeführt, jedoch wurde bei 12 bar Ethylenüberdruck polymerisiert und 1,5 mg rac-Isopropylenbis(1-indenyl)zirkoniumdichlorid eingesetzt.
Es wurde 79,4 g farbloses Pulver erhalten; das enstpricht einer Aktivität von 22900 g Polymer/Stunde x mmol Metallocen. An dem Polymer wurde eine Viskositätszahl von 171 $cm^3/g$ und eine Glastemperatur von 160°C gemessen. Durch thermische Analyse konnte kein Schmelzpunkt nachgewiesen werden.

Tabelle:

| Eigenschaften der COC aus den Beispielen 1,2 und 3; Zugversuch (DIN 53457, Instron 4320) | | | |
|---|---|---|---|
| | Polymer aus Beispiel 1 | Polymer aus Beispiel 2 | Polymer aus Beispiel 3 |
| Reißspannung [MPa] | 67,9 | 67,3 | 71,7 |
| Reißdehnung [%] | 3,62 | 3,59 | 3,62 |
| VZ [$cm^3/g$] | 182 | 148 | 171 |
| Tg[°C] | 134 | 144 | 160 |

Vergleichsbeispiel 1:

In Beispiel 1 wurde mit 5,0 mg rac-Dimethylsilylbis(1-indenyl)zirkoniumdichlorid wiederholt.
Nach dem Trocknen wurde 54,0 g farbloses Pulver erhalten; das enstpricht einer Aktivität von 4840 g Polymer/Stunde x mmol Metallocen. An dem Polymer wurde eine Viskositätszahl von 173 $cm^3/g$ und gemessen. Durch thermische Analyse konnte ein Glaspunkt bei 137°C und ein Schmelzpunkt bei 124°C nachgewiesen werden.

## Patentansprüche

1. Verfahren zur Herstellung eines Cycloolefincopolymers durch Polymerisation mindestens eines Cycloolefins und mindestens eines acyclischen Olefins in Gegenwart eines Katalysators, welcher mindestens einen Cokatalysator und mindestens ein Metallocen der Formel (I) enthält,

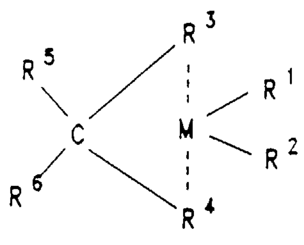

(I),

worin

M Zirkonum bedeutet,
$R^1$ und $R^2$ gleich oder verschieden sind und ein Halogenatom bedeuten,
$R^3$ und $R^4$ gleich sind und ein Cyclopentadienyl oder substituiertes Cyclopentadienyl, Indenyl oder substituiertes Indenyl bedeuten und
$R^5$ und $R^6$ gleich oder verschieden sind und eine Methylgruppe oder Phenylgruppe bedeuten, wobei

das Metallocen mit der Formel (I) als Racemat vorliegt.

2. Verfahren nach Anspruch 1, wobei $R^1$ und $R^2$ ein Chloratom bedeuten, $R^5$ und $R^6$ gleich sind und eine Methylgruppe oder Phenylgruppe bedeuten.

3. Verfahren nach Anspruch 1 oder 2, worin der Cokatalysator ein Aluminoxan ist.

4. Verfahren nach einem oder mehreren der Ansprüche 1 bis 3, worin mindestens ein polycyclisches Olefin und mindestens ein acyclisches Olefin polymerisiert werden.

**Claims**

1. A process for preparing a cycloolefin copolymer by polymerization of at least one cycloolefin and at least one acyclic olefin in the presence of a catalyst which comprises at least one cocatalyst and at least one metallocene of the formula (I),

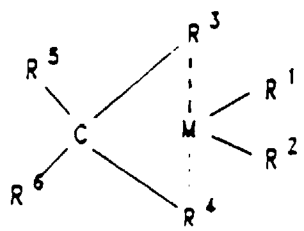

(I),

where

M is zirconium,
$R^1$ and $R^2$ are identical or different and are each a halogen atom,
$R^3$ and $R^4$ are identical and are each a cyclopentadienyl or substituted cyclopentadienyl, indenyl or substituted indenyl group and
$R^5$ and $R^6$ are identical or different and are each a methyl group or a phenyl group, wherein the metallocene of the formula (I) is present as a racemate.

2. The process as claimed in claim 1, wherein $R^1$ and $R^2$ are each a chlorine atom, $R^5$ and $R^6$ are identical and are each a methyl group or a phenyl group.

3. The process as claimed in claim 1 or 2, wherein the cocatalyst is an aluminoxane.

4. The process as claimed in one or more of claims 1 to 3, wherein at least one polycyclic olefin and at least one acyclic olefin are polymerized.

**Revendications**

1. Procédé de préparation d'un copolymère de cyclooléfines par polymérisation d'au moins une cyclooléfine et d'au moins une oléfine acyclique en présence d'un catalyseur qui contient au moins un cocatalyseur et au moins un métallocène de formule (I) :

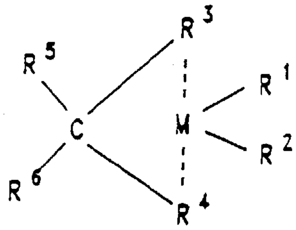

(I),

dans laquelle :

M est le zirconium,
$R^1$ et $R^2$ sont identiques ou différents et représentent chacun un atome d'halogène,
$R^3$ et $R^4$ sont identiques et représentent chacun un groupe cyclopentadiényle ou cyclopentadiényle substitué, indényle ou indényle substitué, et
$R^5$ et $R^6$ sont identiques ou différents et représentent chacun un groupe méthyle ou un groupe phényle,

le métallocène ayant la formule (I) étant présent sous forme du racémate.

**2.** Procédé selon la revendication 1, dans lequel $R^1$ et $R^2$ sont chacun un atome de chlore, $R^5$ et $R^6$ sont identiques et représentent chacun un groupe méthyle ou phényle.

**3.** Procédé selon la revendication 1 ou 2, dans lequel le cocatalyseur est un aluminoxane.

**4.** Procédé selon l'une ou plusieurs des revendications 1 à 3, dans lequel au moins une oléfine polycyclique et au moins une oléfine acyclique sont polymérisées.